# EUROPEAN PATENT APPLICATION

(11) **EP 2 053 673 A1**
(43) Date of publication of application: **29.04.2009**
(21) Application number: 07792039.5
(22) Date of filing: 06.08.2007
(51) Int. Cl.: H01M 4/86, H01M 4/88, H01M 8/10

(54) **ELECTRODE FOR FUEL CELL, METHOD FOR PRODUCING THE SAME, AND FUEL CELL**

(30) Priority: 07.08.2006 JP 2006214484
(71) Applicant: Mitsubishi Gas Chemical Company, Inc., Chiyoda-ku Tokyo 100-8324 (JP)
(72) Inventor: KUROKAWA, Masahiro, Tokyo 100-8324 (JP); GOCHO, Yoshihiro, Niigata-shi, Niigata 950-3112 (JP)
(74) Representative: Gille Hrabal Struck Neidlein Prop Roos
(86) International application number: PCT/JP2007/065369
(87) International publication number: WO 2008/018410

(57) **Abstract**

Provided are: an electrode for a fuel cell, which is obtained by impregnating a supporting base with a vinyl polymer composition and a fuel cell catalyst, the vinyl polymer composition in which a vinyl polymer A having at least one kind of crosslinkable group selected from the group consisting of an epoxy group and an isocyanate group protected by a protecting group and a vinyl polymer B having at least one kind of crosslinkable group selected from the group consisting of a hydroxyl group, a carboxyl group, and an amino group are contained, and at least one of the vinyl polymer A and the vinyl polymer B has an acidic group forming a salt, reacting the crosslinkable group of the vinyl polymer A with the crosslinkable group of the vinyl polymer B, and then subjecting the salt to proton exchange; a method for producing the same; and a fuel cell including an electrolyte membrane and the electrode for a fuel cell.

## Description

### Technical Field

The present invention relates to an electrode for a fuel cell capable of using a high-concentration methanol as a fuel and a method for producing the same. In addition, the present invention relates to a fuel cell including the electrode.

### Background Art

In recent years, a fuel cell has been occupying an important position as a next-generation clean energy source. Of the fuel cells, a polymer electrolyte fuel cell (hereinafter referred to as PEFC) has a negative electrode and a positive electrode placed in a manner sandwiching a solid polymer electrolyte membrane. In a case of a direct methanol fuel cell (hereinafter referred to as DMFC) in which methanol is used as a fuel, electricity is generated through a electrochemical reaction performed by supplying a methanol aqueous solution to a negative electrode side and an oxidant such as oxygen or air to a positive electrode side.

An assembly having high proton conductivity of a solid polymer electrolyte membrane and an electrode is being developed in order to maintain properties of high output and high energy density and to realize a small-sized and light-weighted fuel cell. Further, high ion conductivity and insolubility to a fuel methanol is required for a polymer for forming a catalyst layer to be used as an electrode (particularly negative electrode) of DMFC.

Conventionally, perfluorocarbon sulfonic acid (hereinafter referred to as PFS)-based polymer (e.g., Nafion (registered trademark), manufactured by Du Pont) has been generally used widely as the polymer for forming a catalyst layer, because it has high ion conductivity and is easily handled (for example, refer to Patent Documents 1 to 4). However, in the case where a high-concentration methanol aqueous solution is used as it is as fuel, there is a problem that the PFS-based polymer is easily dissolved into the high-concentration methanol aqueous solution.

To solve the problem, there are disclosed methods in which device structures of the fuel cell are contrived, such as: a method of adjusting methanol concentration in the vicinity of the catalyst layer to be low by adding water just before the high-concentration methanol reaches the catalyst layer; and a method of adjusting methanol concentration to be low by returning water generated at a positive electrode side to a negative electrode side (for example, refer to Patent Document 5). However, according to those methods, there are defects in that the devices become complicated and manufacturing cost thereof becomes high.
[Patent Document 1] JP 61-67787 A
[Patent Document 2] JP 7-254419 A
[Patent Document 3] JP 11-329452 A
[Patent Document 4] JP 11-354129 A
[Patent Document 5] JP 2006-107786 A

### Disclosure of the Invention

### Problems to be solved by the Invention

It is an object of the present invention to provide an electrode for a fuel cell which can use a high-concentration methanol as a fuel and has practical proton conductivity, and a method for producing the same. In addition, it is also an object of the present invention to provide a fuel cell including the electrode for a fuel cell.

### Means for solving the Problems

The inventors of the present invention have found that the above problems can be solved by the following present invention. That is, an electrode for a fuel cell of the present invention can be obtained by: impregnating a supporting base with a vinyl polymer composition and a fuel cell catalyst, the vinyl polymer composition in which a vinyl polymer A having at least one kind of crosslinkable group selected from the group consisting of an epoxy group and an isocyanate group protected by a protecting group and a vinyl polymer B having at least one kind of crosslinkable group selected from the group consisting of a hydroxyl group, a carboxyl group, and an amino group are contained, and at least one of the vinyl polymer A and the vinyl polymer B has an acidic group forming a salt; reacting the crosslinkable group of the vinyl polymer A with the crosslinkable group of the vinyl polymer B; and the subjecting the salt to proton exchange.
Further, a method for producing an electrode for a fuel cell of the present invention includes steps of, in the following order: preparing a vinyl polymer composition (vinyl polymer composition preparation step) in which a vinyl polymer A having at least one kind of crosslinkable group selected from the group consisting of an epoxy group and an isocyanate group protected by a protecting group and a vinyl polymer B having at least one kind of crosslinkable group selected from the group consisting of a hydroxyl group, a carboxyl group, and an amino group are contained, and at least one of the vinyl polymer A and the vinyl polymer B has an acidic group forming a salt; impregnating a supporting base with the vinyl polymer composition and a fuel cell catalyst (impregnation step) ; reacting the crosslinkable group of the vinyl polymer A with the crosslinkable group of the vinyl polymer B (crosslinking reaction step); and subjecting the salt to proton exchange (proton exchange step).
Further, a fuel cell of the present invention includes an electrolyte membrane and the electrode for a fuel cell of the present invention.

### Brief Description of the Drawing

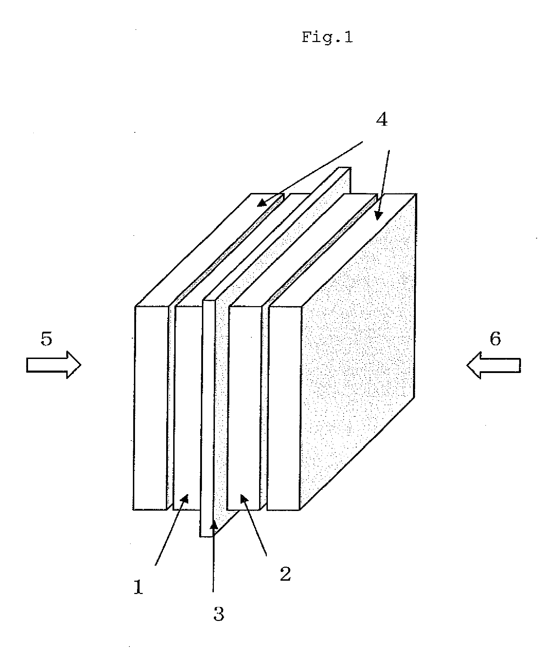

Fig. 1 is a structural schematic diagram showing an example of a fuel cell using an electrode for a fuel cell of the present invention.

### Best Mode for carrying out the Invention

### (Electrode for a fuel cell)

An electrode for a fuel cell of the present invention can be obtained by: impregnating a supporting base with a fuel cell catalyst, which is to be a catalyst for an electrode reaction, and a specific vinyl polymer composition, which contributes to fixing the catalyst and conducting protons; and subjecting the resultant to crosslinking reaction and proton exchange.

The vinyl polymer composition contains a vinyl polymer A having at least one kind of crosslinkable group selected from the group consisting of an epoxy group and an isocyanate group protected by a protecting group and a vinyl polymer B having at least one kind of crosslinkable group selected from the group consisting of a hydroxyl group, a carboxyl group, and an amino group, and is formed by including at least one of the vinyl polymer A and the vinyl polymer B having an acidic group forming a salt.

The vinyl polymer A can be obtained by polymerizing a vinyl monomer having, as a crosslinkable group, an epoxy group and/or an isocyanate group protected by a protecting group. As the vinyl monomer having the epoxy group, glycidyl methacrylate can be exemplified. As the vinyl monomer containing the isocyanate group protected by a protecting group, 2-(O-[1'-methylpropylideneamino]carboxyamino)ethyl methacrylate and 2- (2, 4-dimethylpyrazolecarboxyamino) ethyl methacrylate can be exemplified.

The vinyl polymer A preferably includes an acidic group forming a salt. These kinds of vinyl polymer A are obtained by copolymerization of vinyl monomers having an epoxy group and/or an isocyanate group protected by a protecting group and vinyl monomers having an acidic group forming a salt. Examples of the vinyl monomers having an acidic group forming a salt include styrene sulfonic acid, acrylamide-t-butylsulfonic acid, and vinylsulfonic acid, each of which forms a salt with an alkali metal or an amine.
Note that in the case where the vinyl polymer B does not have the acidic group forming a salt, it is essential for the vinyl polymer A to have the acidic group. On the contrary, in the case where the vinyl polymer B has the acidic group, it is not essential for the vinyl polymer A to have the acidic group.

In the case where the vinyl polymer A has the acidic group forming a salt, satisfactory crosslinking reactivity is expressed and the obtained catalyst layer also shows excellent proton conductivity, when a ratio of charged number of moles of the vinyl monomer having the acidic group to the vinyl monomer having a crosslinkable group (epoxy group and/or isocyanate group protected by a protecting group) is in a range of 40/60 to 95/5. The ratio is more preferably in a range of 50/50 to 90/10, and still more preferably in a range of 60/40 to 85/15.

Further, a third vinyl monomer may be added as a monomer component constituting the vinyl polymer A. Examples of the third vinyl monomers include styrene and vinyl naphthalene. Further examples may include, but are not limited to, monomers containing nitrogen atoms in the molecule such as acrylamide, vinylpyrrolidone, vinylimidazole, vinylpyridine, dimethyl aminoethyl (meth) acrylate, vinylcaprolactam, vinylcarbazole, and vinyldiaminotriazine. Particularly preferable are styrene, acrylamide, 2-vinylpyridine, 4-vinylpyridine, and mixtures thereof.

In the case where the third vinyl monomer as a constituent component of the vinyl polymer A is added to the vinyl polymer composition, a ratio of charged number of moles of total number of moles of the vinyl monomer having the acidic group and the vinyl monomer having the crosslinkable group to number of moles of the third vinyl monomer is preferably in a range of 50/50 to 99/1, more preferably in a range of 60/40 to 95/5, and still more preferably in a range of 70/30 to 90/10.

The vinyl polymer B can be obtained, for example, by (co)polymerizing at least one of a vinyl monomer having a hydroxyl group such as 2-hydroxyethyl methacrylate, a vinyl monomer having a carboxyl group such as (meth)acrylic acid, and a vinyl monomer having an amino group such as allylamine.

The vinyl polymer B also preferably includes an acidic group forming a salt. These kinds of vinyl polymer B are obtained by copolymerization of vinyl monomers having a hydroxyl group, vinyl monomers having a carboxyl group, or vinyl monomers having an amino group with vinyl monomers having an acidic group forming a salt. Examples of the vinyl monomers having an acidic group forming a salt include styrene sulfonic acid, acrylamide-t-butylsulfonic acid, or vinylsulfonic acid, each of which forms a salt with an alkali metal or an amine.

Note that in the case where the vinyl polymer A does not have the acidic group forming a salt, it is essential for the vinyl polymer B to have the acidic group. On the contrary, in the case where the vinyl polymer A has the acidic group, it is not essential for the vinyl polymer B to have the acidic group. However, from a practical viewpoint, it is preferred that the vinyl polymer A and the vinyl polymer B each have the acidic group forming a salt.

In the case where the vinyl polymer B has the acidic group forming a salt, a ratio of charged number of moles of the vinyl monomer having the acidic group to the vinyl monomer having a crosslinkable group (at least one selected from the group consisting of a hydroxyl group, a carboxyl group, and an amino group) is preferably in a range of 40/60 to 95/5. When the ratio is in the range of 40/60 to 95/5, satisfactory crosslinking reactivity is expressed and the obtained vinyl polymer composition also shows excellent proton conductivity. The ratio of charged number of moles is more preferably in a range of 50/50 to 90/10 and still more preferably in a range of 60/40 to 85/15.

Further, a third vinyl monomer may be added as the monomer component constituting the vinyl polymer B. Examples of the third vinyl monomers include styrene and vinyl naphthalene. Further examples may include, but are not limited to, monomers containing nitrogen atoms in the molecule such as acrylamide, vinylpyrrolidone, vinylimidazole, vinylpyridine, dimethyl aminoethyl (meth)acrylate, vinylcaprolactam, vinylcarbazole, and vinyldiaminotriazine. Particularly preferable are styrene, acrylamide, 2-vinylpyridine, 4-vinylpyridine, and mixtures thereof.

In the case where the third vinyl monomer as a constituent component of the vinyl polymer B is added to the vinyl polymer composition, a ratio of charged number of moles of total number of moles of the vinyl monomer having the acidic group and the vinyl monomer having the crosslinkable group to number of moles of the third vinyl monomer is preferably in a range of 50/50 to 99/1, more preferably in a range of 60/40 to 95/5, and still more preferably in a range of 70/30 to 90/10.

A preparation of each of the vinyl polymer A and the vinyl polymer B may be performed in accordance with known polymerization methods, known polymerization conditions, and the like, and is not particularly limited. For example, the polymerization can be initiated by using heat, light, or electron rays. In the case of heat polymerization, radical polymerization initiators, cation polymerization initiators, and anion polymerization initiators may be used. Radical polymerization initiators are preferably used. Specifically, organic peroxides and azo compounds listed in a catalogue of NOF Corp. may be used. t-butyl peroxy-2-ethylhexyl carbonate, benzoyl peroxide, azobis isobutyronitrile, and the like can also be used.

An addition amount of the polymerization initiator depends on respective polymerization conditions, and is preferably 0.01 to 10 parts by mass, more preferably 0.1 to 7 parts by mass, and still more preferably 0.5 to 5 parts by mass with respect to 100 parts by mass of a total of the vinyl monomers. A polymerization temperature is preferably 0°C to 120°C, more preferably 20°C to 100°C, and still more preferably 30°C to 80°C, and maybe appropriately selected by taking into consideration a composition of the vinyl monomers, physical properties of the polymer to be obtained, processing time, and the like.

It is preferred to use a polymerization solvent in order to perform the polymerization reaction stably, or to lower a viscosity of the polymerized product to be obtained. Examples of the polymerization solvent include solvents such as toluene, xylene, alcohols, esters, ketones, dimethyl sulfoxide, N-methylpyrrolidone, and dimethylformamide. Further, various additives such as colorants and viscosity modifiers may also be added.

The fuel cell catalysts used in the present invention are, for example, platinum on carbon powder as a positive electrode and metals such as platinum/ruthenium or platinum/cobalt on carbon powder as a negative electrode. In general, a commercially available catalyst for PEFC can be used, and specific examples thereof include products of Johnson Matthey PLC of the UK, Tanaka Kikinzoku Kogyo K.K., ISHIFUKU Metal Industry Co., Ltd., and the like.

Examples of the supporting base used in the present invention include carbon paper, a carbon cloth, a glass cloth, paper, a woven fabric, nonwoven fabric, and a metal porous body. Specific examples include carbon paper (registered trademark: Toleca-mat) manufactured by Toray Industries. Inc.; carbon cloth manufactured by BASF Fuel Cell Inc., USA; nonwoven glass fabric (registered trademark: MC paper) manufactured by Nippon Sheet Glass Co., Ltd.; Specialty paper (registered trademark: Bemliese) manufactured by Asahi Kasei Fibers Corp.; metal porous body (registered trademark: Cermet) manufactured by Sumitomo Electric Toyama Co., Ltd.; nonwoven fabric (registered trademark: Yupo) manufactured by Yupo Corp.; nonwoven fabric (registered trademark: Diamond spun lace) manufactured by Mitsubishi Paper Mills Ltd.; nonwoven fabric (registered trademark: Albes, Alucima ) manufactured by Unitika Ltd.; and nonwoven fabric (registered trademark: Bonnip, Splitop) manufactured by Maeda Kosan Co., Ltd.

### (Method for producing electrode for fuel cell)

The electrode for a fuel cell of the present invention is produced by undergoing, in the stated order: a composition preparation step, the composition being formed of specific vinyl polymers and a fuel cell catalyst; an impregnation step; a crosslinking reaction step; and a proton exchange step. First, in the composition preparation step, the composition formed of the specific vinyl polymers and the fuel cell catalyst is prepared by mixing the vinyl polymer A, the vinyl polymer B, the fuel cell catalyst, and a solvent.

A compounding ratio of the fuel cell catalyst is preferably 10 to 100 parts by mass, more preferably 20 to 90 parts by mass, and still more preferably 30 to 80 parts by mass with respect to 100 parts by mass of a total amount of the vinyl polymer A and the vinyl polymer B. Further, the electrode for a fuel cell which is finally obtained is adjusted to contain metals (catalyst components) such as platinum, platinum/ruthenium, or platinum/cobalt in an amount of preferably 0.1 to 10 mg/cm², more preferably 0.2 to 8 mg/cm², and still more preferably 0.5 to 6 mg/cm².
Subsequently, in the impregnation step, a supporting base is impregnated with the composition. As an impregnation method, a general method which is applied in a catalyst preparation method can be employed.

After the impregnation step, the crosslinkable group of the vinyl polymer A and the crosslinkable group of the vinyl polymer A are reacted in air or under nitrogen atmosphere by heating.
A crosslinking reaction temperature depends on properties of respective crosslinkable groups, a heat-resistant temperature of the supporting base, and the like, and is preferably 50 to 200°C, more preferably 60°C to 180°C, and still more preferably 70°C to 160°C. A crosslinking reaction time is 0.1 to 24 hours, and may be appropriately selected according to a degree of the reaction. Further, a catalyst for promoting the crosslinking reaction may be added in a range not inhibiting performance of the polymer crosslinked body to be obtained.

After completion of the crosslinking reaction, the remaining solvent and the unreacted product are washed and removed. Thereafter, an ion exchange treatment in which the salt is subjected to proton exchange is performed by a known method, for example, impregnating the salt with diluted sulfuric acid aqueous solution of 30% or less and preferably 15% or less at room temperature (proton exchange step). After that, the resultant is washed again sufficiently with water to remove excess sulfuric acid, whereby the electrode for a fuel cell of the present invention can be obtained.

### (Fuel cell)

The fuel cell of the present invention includes an electrolyte membrane and the electrode for a fuel cell of the present invention. The fuel cell can be produced by a conventional method. For example, as shown in Fig. 1, a fuel cell in which high ion conductivity is maintained can be obtained by sandwiching an electrolyte membrane 3 between a negative electrode 1 and a positive electrode 2, for at least one of which the electrode for a fuel cell of the present invention is used.

Further, a gas diffusion layer 4 maybe provided on each of surfaces of the negative electrode 1 and the positive electrode 2. By providing those gas diffusion layers 4, a methanol aqueous solution or methanol which is used for power generation is supplied from a direction of an arrow 5 and oxygen or air is supplied from a direction of an arrow 6, and the methanol aqueous solution or methanol and the oxygen or air are diffused and distributed uniformly on the surface of the negative electrode 1 and the surface of the positive electrode 2, respectively.

Here, taking into consideration insolubility to methanol, the electrode for a fuel cell is used at least as the negative electrode 1. It is of course possible to use the electrode for a fuel cell as the positive electrode 2, and in this case, the cost needed for producing the positive electrode 2 can be made lower than that needed for producing a positive electrode by using conventional Nafion (registered trademark) membrane.

The fuel cell of the present invention is particularly satisfactorily operated in the case where concentration of methanol is low. In the case of a high-concentration methanol, the electrode for a fuel cell of the present invention shows excellent insolubility to the methanol, but the electrolyte membrane 3 may be dissolved into the methanol depending on a material thereof. Accordingly, when the concentration of methanol is high, it is preferred to use the electrode for a fuel cell of the present invention as the negative electrode 1 and a specific electrolyte membrane as the electrolyte membrane 3.

As the specific electrolyte membrane, it is preferred to use a solid polymer electrolyte membrane which is obtained by impregnating a porous membrane made of polyolefin with a vinyl monomer having a basic group and a crosslinkable vinyl monomer to be polymerized and then subjecting the resultant to a sulfonation treatment, in which at least one of the vinyl monomer having a basic group and the crosslinkable vinyl monomer has an aromatic ring or a heterocyclic ring.
The electrolyte membrane can be used without being dissolved even in methanol whose concentration is higher than that of the methanol which is capable of being used in the case where Nafion (registered trademark) is used as an electrolyte membrane (for example, several tens of % or more, more strictly 30% or more).
Hereinafter, the electrolyte membrane is described.

Examples of the vinyl monomers having basic groups include monomers containing nitrogen atoms in the molecule such as acrylamide, allylamine, vinylpyrrolidone, vinylimidazole, aminoacrylamide, vinylaminosulfone, vinylpyridine, dimethyl aminoethyl (meth)acrylate, vinylcaprolactam, vinylcarbazole, vinyldiaminotriazine, and ethyleneimine. Particularly preferable are 2-vinylpyridine, 4-vinylpyridine, and mixtures thereof.

Examples of the crosslinkable vinyl monomers include divinyl compounds such as divinylbenzene, tetraethylene glycol dimethacrylate, methylene bis acrylamide, ethylene glycol dimethacrylate, diethylene glycol dimethacrylate, triethylene glycol dimethacrylate, and nanoethylene glycol dimethacrylate. Divinylbenzene is particularly preferable.
Note that at least one of the vinyl monomer having a basic group and the crosslinkable vinyl monomer has an aromatic ring or a heterocyclic ring.

In addition to the vinyl monomer having a basic group and the crosslinkable vinyl monomer, a third monomer and a solvent (including plasticizer) which are copolymerizable with the above monomers can be added if required.

Examples of the third monomers include styrene, vinyl naphthalene, acrylamide-t-sodium butyl sulfonate, and sodium vinyl sulfonate.

Examples of the solvent include toluene, xylene, dimethylsulfoxide, dimethylformamide, and alcohols.

Further, so-called plasticizers may be used as the solvent. Examples of the plasticizer include, but are not limited to, aceytyl tributyl citrate, dibutyl phthalate, dioctyl phthalate, dibutyl adipate, and tributyl glycerol. Those may be chosen by taking into account boiling point, viscosity, and polyolefin membrane impregnating ability.

A charged molar ratio of the vinyl monomer having a basic group to the crosslinkable vinyl monomer at the time of impregnating the porous membrane with the vinyl monomer having a basic group and the crosslinkable vinyl monomer (number of moles of the vinyl monomer having a basic group/number of moles of the crosslinkable vinyl monomer) is preferably in a range of 20/80 to 90/10. When the ratio is in the above range, satisfactory membrane-forming property is exhibited, and satisfactory proton conductivity and excellent methanol impermeability can be expressed by undergoing a sulfonation treatment described below. The molar ratio is more preferably in a range of 70/30 to 40/60 and still more preferably in a range of 60/40 to 50/50.

In the case where the third monomer is added, a ratio of total of number of moles of the vinyl monomer having a basic group (P) and number of moles of the third monomer (Q) to number of moles of the crosslinkable vinyl monomer (R), that is, (P + Q) /R, is preferably in a range of 20/80 to 90/10, and a molar ratio of the vinyl monomer having a basic group to the third monomer (P/Q) is preferably in a range of 10/90 to 99/1.

The copolymerization of the vinyl monomer having a basic group and the crosslinkable vinyl monomer can be initiated by heat, light, electron rays, and the like. In the case of the polymerization by heat, a radical polymerization initiator, a cation polymerization initiator, or an anion polymerization initiator can be used. Preferred is the radical polymerization initiator. In particular, when a peroxide compound having high hydrogen-abstraction ability is used, the vinyl monomer having a basic group and the crosslinkable vinyl monomer also form a crosslinked structure with the porous membrane made of polyolefin, in addition to the polymerization reaction therebetween. Therefore, strength and durability of the obtained solid polymer electrolyte membrane are improved, which is preferable. As the radical initiator, organic peroxides listed in a catalog of NOF CORPORATION, for example, can be used. In particular, t-butylperoxy-2-ethylhexyl carbonate and benzoylperoxide are preferred.

An addition amount of the polymerization initiator depends on polymerization conditions, and is 0.001 to 10 parts by mass, preferably 0.01 to 5 parts by mass, and more preferably 0.05 to 2 parts by mass with respect to 100 parts by mass of a total amount of used raw material monomers. A polymerization temperature is 0°C to 120°C, preferably 20 °C to 100°C, and more preferably 30°C to 80°C, and may be appropriately selected by taking into consideration a composition of the monomers, physical properties of the polymer to be obtained, processing time, and the like.

As a raw material resin of the porous membrane, polyolefin is used. Specific examples thereof include polyethylene, polypropylene, and polystyrene, but are not limited thereto.
Polyethylene is preferably used, and ultrahigh molecular weight polyethylene is particularly preferably used.

A weight average molecular weight of polyolefin is preferably 50,000 or more, more preferably 1,000,000 or more, and still more preferably 5,000,000 or more.

An average pore diameter of the porous membrane made of polyolefin is preferably 0.001 to 5 µm, more preferably 0.01 to 1 µm, and still more preferably 0.05 to 0.5 µm.

A void percentage of the porous membrane made of polyolefin is preferably 20 to 60%, more preferably 30 to 50%, and still more preferably 35 to 45%.

A thickness of the porous membrane made of polyolefin is generally 1 to 300 µm, preferably 5 to 100 µm, and more preferably 10 to 50 µm.

An air permeability of the porous membrane made of polyolefin is preferably 100 to 900 seconds/100 ml, more preferably 150 to 750 seconds/100 ml, and still more preferably 200 to 650 seconds/100 ml.

Examples of the porous membrane made of polyolefin include Hipore (registered trademark), manufactured by Asahi Kasei Chemicals Corp.; Solupor (registered trademark) and Solfil (registered trademark), manufactured by Tiejin Limited; Espoir (registered trademark), manufactured by Mitsui Chemicals, Inc.; Setela (registered trademark), manufactured by Tonen General Sekiyu K.K.; and Yupo (registered trademark), manufactured by Yupo Corp.

Further, the porous membrane made of polyolefin is preferably subjected to a hydrophilication treatment before impregnation to be described later. A known method can be applied to the hydrophilication treatment and the treatment is not limited thereto. For example, hydrophilication can be performed by a corona discharge treatment, a plasma irradiation treatment, or a sulfuric acid treatment. By performing those hydrophilication treatments, permeability of the raw material monomer into the porous membrane is further increased in the impregnation to be described later.

The porous membrane made of polyolefin is impregnated with the vinyl monomer having a basic group, the crosslinkable vinyl monomer, and a raw material composition containing a polymerization initiator. An impregnation treatment is performed by a known method and is not limited thereto. For example, the porous membrane made of polyolefin is impregnated with the raw material composition and sandwiched between mold releasing films such as PET, and then excess raw material composition is removed. For example, a necessary and sufficient amount of raw material composition liquid can be charged into every pore of the porous membrane by pressing the porous membrane with a roller, while the excess raw material composition is being removed. The impregnation treatment is generally performed at ordinary temperatures and pressures, and may be performed under increased pressure or under reduced pressure as necessary.

After the impregnation treatment, polymerization is performed. The porous membrane subjected to the impregnation treatment is sandwiched between glass plates each via the mold releasing film, and is heat-polymerized under nitrogen atmosphere. Polymerization conditions may be appropriately selected by taking into consideration a kind of a polymerization initiator and a composition of the raw material composition.

A membrane obtained by polymerization is impregnated with a generally used solvent solution such as acetone or methanol to thereby remove the solvent and the unreacted product, and is dried.

After the membrane is dried, a sulfonation treatment is performed. To the sulfonation treatment, a general method using fuming sulfuric acid, chlorosulfuric acid, or the like can be applied. An increasing rate of mass by the sulfonation treatment ((mass of the polymer after the sulfonation treatment - mass of the polymer before the sulfonation treatment)/mass of the polymer before the sulfonation treatment × 100) is preferably in a range of 20 to 240%. When the increasing rate is in the above range, the balance among proton conductivity, methanol impermeability, and mechanical strength of the solid polymer electrolyte membrane can be maintained. The increasing rate of mass by the sulfonation treatment is more preferably in a range of 50 to 210% and particularly preferably in a range of 80 to 180%.

The sulfonation treatment introduces a sulfonic acid group into a polymer having a basic group. Therefore, there is obtained a solid polymer electrolyte membrane in which an acidic group and a basic group coexist with each other, more specifically, a solid polymer electrolyte membrane in which a salt is formed intramolecularly or intermolecularly with an acidic group and a basic group because the acidic group and the basic group coexist with each other. It is essential for a PFS-based polymer membrane to have the interposition of water, because the protons are conducted each in a form of a hydronium ion. However, between the salts in the electrolyte membrane, it is assumed that the protons are conducted by Grotthuss Mechanism, which does not require water. Therefore, the conduction of the protons between adjacent salts is performed smoothly from the negative electrode towards the positive electrode. Further, the salt has higher affinity with water than that with methanol, thus, the salt expresses excellent methanol impermeability. This function enables to introduce, by power generation, water generated at the positive electrode side to the negative electrode side, and to continue the power generation by supplementing water needed for a reaction at the negative electrode side. As a result, a high-concentration methanol, which has been extremely difficult to be used with the conventional PFS-based polymer membrane, can be used as a fuel.

Thus, a solid polymer electrolyte membrane whose proton conductivity (25°C) is about the same as that of Nafion (registered trademark) can be obtained.

Further, a solid polymer electrolyte membrane whose methanol permeation rate (measured value after 3 hours at 40°C, 30% methanol aqueous solution) is 3 mg/cm²/min or less can be obtained.

Hereinafter, the present invention is described in more detail by way of examples, but is not limited thereto.

### Synthesis Example 1 of Polymer A

26.9 g (0.12 mol) of sodium styrene sulfonate, 7.26 g (0.03 mol) of 2-(O-[1'-methylpropylideneamino]carboxyamino)ethyl methacrylate (manufactured by SHOWA DENKO K.K., Karenz MOI-BM (registered trademark)), and, as a polymerization initiator, 0.25 g (0.0015 mol) of azobisisobutylonitrile were dissolved in 87.2 g of dimethyl sulfoxide. The resultant was stirred at 60°C for 6 hours, whereby a Polymer A-1 solution was obtained.

### Synthesis Example 2 of Polymer A

26.9 g (0.12 mol) of sodium styrene sulfonate, 4.27 g (0.03 mol) of glycidyl methacrylate, and, as a polymerization initiator, 0.25 g (0.0015 mol) of azobisisobutylonitrile were dissolved in 81.0 g of dimethyl sulfoxide. The resultant was stirred at 60°C for 6 hours, whereby a Polymer A-2 solution was obtained.

### Synthesis Example 1 of Polymer B

26.9 g (0.12 mol) of sodium styrene sulfonate, 3.9 g (0.03 mol) of 2-hydroxyethyl methacrylate, and, as a polymerization initiator, 0.25 g (0.0015 mol) of azobisisobutylonitrile were dissolved in 90. 0 g of dimethyl sulfoxide. The resultant was stirred at 60°C for 6 hours, whereby a Polymer B-1 solution was obtained.

### Synthesis Example 2 of Polymer B

26.9 g (0.12 mol) of sodium styrene sulfonate, 1.9 g (0.024 mol) of 2-vinylpyridine, 3.9 g (0.03 mol) of 2-hydroxyethyl methacrylate, and, as a polymerization initiator, 0.25 g (0.0015 mol) of azobisisobutylonitrile were dissolved in 85.4 g of dimethyl sulfoxide. The resultant was stirred at 60°C for 6 hours, whereby a Polymer 2-B solution was obtained.

### Example 1

1.10 g of a vinyl polymer composition in which Polymer A-1 and Polymer B-1 were mixed in such a manner that a mass ratio of Polymer A-1 to Polymer B-1 was 50/50, 0.66 g of carbon-supported platinum/ruthenium catalyst (manufactured by Johnson Matthey PLC of the UK, trade name: HiSPEC (registered trademark) 5000), and 2-51 g of dimethyl sulfoxide were mixed sufficiently. The mixture was applied to specialty paper (manufactured by ASAHI KASEI FIBERS CORPORATION, Bemliese (registered trademark) SN140), to thereby impregnate the specialty paper with the mixture, and the resultant was heated in air at 110°C for 4 hours. The obtained membrane was impregnated with 5% sulfuric acid aqueous solution for 2 hours to thereby perform ion exchange. It was found that, from a mass in the dry state, the resultant contained 4.1 mg/cm² of platinum/ruthenium. Thus, an electrode for a fuel cell (for a negative electrode) was obtained.

### Example 2

1.10 g of a vinyl polymer composition in which Polymer A-1 and Polymer B-2 were mixed in such a manner that a mass ratio of Polymer A-1 to Polymer B-2 was 50/50, 0.66 g of carbon-supported platinum/ruthenium catalyst (manufactured by Johnson Matthey PLC of the UK, trade name: HiSPEC (registered trademark) 5000), and 1.0 g of dimethyl sulfoxide were mixed sufficiently. The mixture was applied to a nonwoven fabric (manufactured by Unitika Ltd., Eleves (registered trademark) T0403WDO) which was made hydrophilic by being subjected to a corona discharge treatment beforehand, to thereby impregnate the nonwoven fabric with the mixture, and the resultant was heated in air at 150°C for 5 hours. The obtained membrane was impregnated with 5% sulfuric acid aqueous solution for 2 hours to thereby perform ion exchange. It was found that, from a mass in the dry state, the resultant contained 0.9 mg/cm² of platinum/ruthenium. Thus, an electrode for a fuel cell (for a negative electrode) was obtained.

### Example 3

1.10 g of a vinyl polymer composition in which Polymer A-2 and Polymer B-1 were mixed in such a manner that a mass ratio of Polymer A-2 to Polymer B-1 was 50/50, 0.56 g of carbon-supported platinum/ruthenium catalyst (manufactured by Johnson Matthey PLC of the UK, trade name: HiSPEC (registered trademark) 5000), and 1.0 g of dimethyl sulfoxide were mixed sufficiently. The mixture was applied to a nonwoven fabric (manufactured by Unitika Ltd., Super Alcima (registered trademark) IIA0505/WJC), to thereby impregnate the nonwoven fabric with the mixture, and the resultant was heated in air at 150°C for 15 hours. The obtained membrane was impregnated with 5% sulfuric acid aqueous solution for 2 hours to thereby perform ion exchange. It was found that, from a mass in the dry state, the resultant contained 1.5 mg/cm² of platinum/ruthenium. Thus, an electrode for a fuel cell (for a negative electrode) was obtained.

### Example 4

1.10 g of a vinyl polymer composition in which Polymer A-1 and Polymer B-1 were mixed in such a manner that a mass ratio of Polymer A-1 to Polymer B-1 was 50/50, 0.66 g of carbon-supported platinum catalyst (manufactured by Johnson Matthey PLC of the UK, trade name: HiSPEC (registered trademark) 4000), and 1.0g of dimethyl sulfoxide were mixed sufficiently. The mixture was applied to a nonwoven fabric (manufactured by Unitika Ltd., Eleves (registered trademark) S0403WDO) which was made hydrophilic by being subjected to a corona discharge treatment beforehand, to thereby impregnate the nonwoven fabric with the mixture, and the resultant was heated in air at 110°C for 20 hours. The obtained membrane was impregnated with 5% sulfuric acid aqueous solution for 2 hours to thereby perform ion exchange. It was found that, from a mass in the dry state, the resultant contained 2.7 mg/cm² of platinum. Thus, an electrode for a fuel cell (for a positive electrode) was obtained.

### Production Example 1 of electrolyte membrane

11. 83g of aceytyl tributyl citrate as the solvent was uniformly added to a mixture of 31.53g (0.3 mol) of 2-vinylpyridine, 47.35g (0.2 mol) of 55%-divinylbenezene (solvent solution, mixed xylene), and 2.87g (0.012 mol) of t-butylperoxy-2-ethylhexyl carbonate as the polymerization initiator. This solution is referred to as monomer solution X.

A porous membrane made of polyethylene (manufactured by Asahi Kasei Chemicals Corporation, HIGHPORE (registered trademark) N9420G), which was made hydrophilic by being subjected to a corona discharge treatment beforehand, was impregnated with the monomer solution X, sandwiched between PET films, further sandwiched between glass plates, and was reacted under nitrogen atmosphere at 80°C for 20 hours.
The obtained membrane was impregnated with acetone to thereby remove the unreacted product, the solvent, and the like, and was dried sufficiently.

Next, the membrane was impregnated with fuming sulfuric acid (SO₃ concentration: 2 to 3 wt%) and was reacted at 60°C for 90 hours. Sulfuric acid attached to the obtained membrane was washed well with water. An increasing rate of mass of before and after the treatment was 110%.

### Production Example 2 of electrolyte membrane

12.8g of aceytyl tributyl citrate as the solvent was uniformly added to a mixture of 10.51g (0.1 mol) of 2-vinylpyridine, 59.19g (0.25 mol) of 55%-divinylbenezene (solvent solution, mixed xylene), 15.63g (0.15 mol) of styrene monomer, and 2.93g (0.012 mol) of t-butylperoxy-2-ethylhexyl carbonate. This solution is referred to as monomer solution Y.

A porous membrane made of polyethylene (manufactured by Asahi Kasei Chemicals Corporation, HIGHPORE (registered trademark) N9420G), which was made hydrophilic by being subjected to a corona discharge treatment beforehand, was impregnated with the monomer solution Y, sandwiched between PET films, further sandwiched with glass plates, and was reacted under nitrogen atmosphere at 80°C for 20 hours.
The obtained membrane was impregnated with acetone to thereby remove the unreacted product, the solvent, and the like, and was dried sufficiently.

Next, the membrane was impregnated with fuming sulfuric acid (SO₃ concentration: 2 to 3 wt%) and was reacted at 60°C for 90 hours. Sulfuric acid attached to the obtained membrane was washed well with water. An increasing rate of mass of before and after the treatment was 107%.

### Example 5

A power generation test was performed by using a fuel cell assemble kit (Pem Master (registered trademark) PEM-004DM) manufactured by Chemix.Co.,ltd.
Specifically, the followings were assembledin the statedorder from the negative electrode side: carbon paper; the electrode for a fuel cell obtained in Example 1; the electrolyte membrane obtained in Production Example 1 of electrolyte membrane; and carbon paper with catalyst manufactured by Chemix.Co.,ltd., whereby a fuel cell was given. When 4 ml of 20% methanol were supplied into a fuel tank of the fuel cell, an electromotive force thereof was 318 mV and the fuel cell could drive a motor for 62 hours.

Further, when 90% methanol was used instead of 20% methanol, the electromotive force of the fuel cell was 326 mV and the fuel cell could drive a motor for 176 hours.

### Example 6

A power generation test was performed by using a fuel cell assemble kit (Pem Master (registered trademark) PEM-004DM) manufactured by Chemix.Co.,ltd.
Specifically, the followings were assembled in the stated order from the negative electrode side: carbon paper; the electrode for a fuel cell obtained in Example 1; the electrolyte membrane obtained in Production Example 2 of electrolyte membrane; and carbon paper with catalyst manufactured by Chemix.Co.,ltd., whereby a fuel cell was given. When 4 ml of 20% methanol were supplied into a fuel tank of the fuel cell, an electromotive force thereof was 288 mV and the fuel cell could drive a motor for 42 hours.

Further, when 100% methanol was used instead of 20% methanol, the electromotive force of the fuel cell was 270 mV and the fuel cell could drive a motor for 147 hours.

### Example 7

A power generation test was performed by using a fuel cell assemble kit (Pem Master (registered trademark) PEM-004DM) manufactured by Chemix.Co.,ltd.
Specifically, the followings were assembled in the stated order from the negative electrode side: carbon paper; the electrode for a fuel cell obtained in Example 3; the electrolyte membrane obtained in Production Example 2 of electrolyte membrane; and carbon paper with catalyst manufactured by Chemix.Co., ltd., whereby a fuel cell was given. When 2 ml of 30% methanol were supplied into a fuel tank of the fuel cell, an electromotive force thereof was 230 mV and the fuel cell could drive a motor for 16 hours.

### Example 8

A power generation test was performed by using a fuel cell assemble kit (Pem Master (registered trademark) PEM-004DM) manufactured by Chemix.Co.,ltd.
Specifically, the followings were assembled in the stated order from the negative electrode side: carbon paper; the electrode for a fuel cell obtained in Example 1; the electrolyte membrane obtained in Production Example 2 of electrolyte membrane; the electrode for a fuel cell obtained in Example 4; and carbon paper, whereby a fuel cell was given. When 2 ml of 30% methanol were supplied into a fuel tank of the fuel cell, an electromotive force thereof was 288 mV and the fuel cell could drive a motor for 16 hours.
From Example 8, it was found that the electrode for a fuel cell of the present invention could also be used as a positive electrode.

### Example 9

A power generation test was performed by using a fuel cell assemble kit (Pem Master (registered trademark) PEM-004DM) manufactured by Chemix.Co.,ltd.
Specifically, the followings were assembled in the stated order from the negative electrode side: carbon paper; two sheets of the electrodes for a fuel cell obtained in Example 2; the electrolyte membrane obtained in Production Example 2 of electrolyte membrane; the electrode for a fuel cell obtained in Example 4; and carbon paper, whereby a fuel cell was given. When 2 ml of 30% methanol were supplied into a fuel tank of the fuel cell, an electromotive force thereof was 271 mV and the fuel cell could drive a motor for 13 hours.

From Example 9, it was found that the electrode for a fuel cell of the present invention could also be used by piling a plurality thereof together. In the case where a sufficient electromotive force cannot be obtained from one electrode due to insufficient fuel processing ability thereof, there is an advantage that a sufficient electromotive force can be obtained by piling a plurality of electrodes.

### Reference Example 1

A fuel cell was produced in the same manner as in Example 1 except that a PFS-based polymer (manufactured by Du Pont, Nafion (registered trademark)) was used as an electrolyte membrane. When 4 ml of 30% methanol were supplied into a fuel tank of the fuel cell, an electromotive force thereof was 237 mV. After 3 hours, the catalyst of the carbon paper with catalyst manufactured by Chemix.Co.,ltd was eluted and a motor stopped rotating.

From the results of Examples 5 to 9 and Reference Example 1, it was found that the specific electrolyte membranes (membranes obtained in Production Example 1 of electrolyte membrane and Production Example 3 of electrolyte membrane) were extremely effective when a high-concentration methanol was used as the fuel.

### Comparative Example 1

A power generation test was performed by using a fuel cell assemble kit (Pem Master (registered trademark) PEM-004DM) manufactured by Chemix. Co., ltd.
Specifically, the followings were assembled in the stated order from the negative electrode side: carbon paper; the electrode for a fuel cell formed by using a PFS-based polymer (manufactured by Du Pont, Nafion (registered trademark)); Nafion (registered trademark) 117 membrane manufactured by Du Pont; and carbon paper with catalyst manufactured by Chemix. Co., ltd., whereby a fuel cell was given. When 4 ml of 100% methanol were supplied into a fuel tank of the fuel cell, the fuel methanol permeated and leaked into the positive electrode and further dissolved the catalyst layer, and the fuel cell could not drive a motor.

### Comparative Example 2

When 4 ml of 30% methanol were supplied into the fuel tank of the fuel cell of Comparative Example 1, both electrodes of the negative electrode and the positive electrode were eluted and the fuel cell could not drive a motor.
In the case where 4 ml of 20% methanol were supplied into the fuel tank of the fuel cell of Comparative Example 1, an electromotive force thereof was 345 mV and the fuel cell could drive a motor for 24 hours.
In the case where 4 ml of 15% methanol were supplied into the fuel tank of the fuel cell of Comparative Example 1, an electromotive force thereof was 350 mV and the fuel cell could drive a motor for 21 hours.

### Industrial Applicability

The electrode for a fuel cell of the present invention can use a high-concentration methanol as a fuel and has practical proton conductivity. The electrode for a fuel cell is useful for the fuel cells such as the direct methanol fuel cell and the polymer electrolyte fuel cell.

## Claims

1. An electrode for a fuel cell, which is obtained by:
impregnating a supporting base with a vinyl polymer composition and a fuel cell catalyst, the vinyl polymer composition in which a vinyl polymer A having at least one kind of crosslinkable group selected from the group consisting of an epoxy group and an isocyanate group protected by a protecting group and a vinyl polymer B having at least one kind of crosslinkable group selected from the group consisting of a hydroxyl group, a carboxyl group, and an amino group are contained, and at least one of the vinyl polymer A and the vinyl polymer B has an acidic group forming a salt;
reacting the crosslinkable group of the vinyl polymer A with the crosslinkable group of the vinyl polymer B; and then
subjecting the salt to proton exchange.

2. The electrode for a fuel cell according to claim 1, wherein the electrode is used as an electrode for a direct methanol fuel cell.

3. The electrode for a fuel cell according to claim 1, wherein a monomer forming the crosslinkable group of the vinyl polymer A comprises a vinyl monomer, and
the vinyl monomer comprises at least one of glycidyl methacrylate,
2-(O-[1'-methylpropylideneamino]carboxyamino)ethyl methacrylate, and 2-(2,4-dimethylpyrazolecarboxyamino)ethyl methacrylate.

4. The electrode for a fuel cell according to claim 1, wherein a monomer forming the crosslinkable group of the vinyl polymer B comprises a vinyl monomer, and
the vinyl monomer comprises at least one of 2-hydroxyethyl methacrylate, (meth)acrylic acid, and allylamine.

5. The electrode for a fuel cell according to claim 1, wherein a monomer forming the acidic group comprises a vinyl monomer, and
the vinyl monomer comprises one of styrene sulfonic acid, acrylamide-t-butylsulfonic acid, and vinylsulfonic acid, each of which forms a salt with an alkali metal or an amine.

6. The electrode for a fuel cell according to claim 1, wherein the supporting base comprises one of paper, a nonwoven fabric, carbon paper, a carbon cloth, a glass cloth, a woven fabric, and a metal porous body.

7. A method for producing an electrode for a fuel cell,
comprising steps of, in the following order:
preparing a vinyl polymer composition in which a vinyl polymer A having at least one kind of crosslinkable group selected from the group consisting of an epoxy group and an isocyanate group protected by a protecting group and a vinyl polymer B having at least one kind of crosslinkable group selected from the group consisting of a hydroxyl group, a carboxyl group, and an amino group are contained, and at least one of the vinyl polymer A and the vinyl polymer B has an acidic group forming a salt;
impregnating a supporting base with the vinyl polymer composition and a fuel cell catalyst;
reacting the crosslinkable group of the vinyl polymer A with the crosslinkable group of the vinyl polymer B; and
subjecting the salt to proton exchange.

8. The method for producing an electrode for a fuel cell according to claim 7, wherein a monomer forming the crosslinkable group of the vinyl polymer A comprises a vinyl monomer, and
the vinyl monomer comprises at least one of glycidyl methacrylate,
2-(O-[1'-methylpropylideneamino]carboxyamino)ethyl methacrylate, and 2-(2,4-dimethylpyrazolecarboxyamino)ethyl methacrylate.

9. The method for producing an electrode for a fuel cell according to claim 7, wherein a monomer forming the crosslinkable group of the vinyl polymer B comprises a vinyl monomer, and
the vinyl monomer comprises at least one of 2-hydroxyethyl methacrylate, (meth)acrylic acid, and allylamine.

10. The method for producing an electrode for a fuel cell according to claim 7, wherein a monomer forming the acidic group comprises a vinyl monomer, and
the vinyl monomer comprises one of styrene sulfonic acid, acrylamide-t-butylsulfonic acid, and vinylsulfonic acid, each of which forms a salt with an alkali metal or an amine.

11. A fuel cell, comprising:
an electrolyte membrane; and
the electrode for a fuel cell according to claim 1.

12. The fuel cell according to claim 11, wherein methanol is used as a fuel.

13. The fuel cell according to claim 11,
wherein the electrolyte membrane comprises a solid polymer electrolyte membrane, which is obtained by impregnating a porous membrane made of polyolefin with a vinyl monomer having a basic group and a crosslinkable vinyl monomer to be polymerized and then subjecting the resultant to a sulfonation treatment, in which at least one of the vinyl monomer having a basic group and the crosslinkable vinyl monomer has an aromatic ring or a heterocyclic ring.
